**Europäisches Patentamt**

**European Patent Office**

**Office européen des brevets**

(19)

(11) Veröffentlichungsnummer : **0 420 878 B1**

## (12) EUROPÄISCHE PATENTSCHRIFT

(45) Veröffentlichungstag der Patentschrift :
**13.01.93 Patentblatt 93/02**

(51) Int. Cl.$^5$ : **A23K 1/175, A23K 1/18**

(21) Anmeldenummer : **89906718.5**

(22) Anmeldetag : **10.06.89**

(86) Internationale Anmeldenummer :
**PCT/DE89/00380**

(87) Internationale Veröffentlichungsnummer :
**WO 89/12402 28.12.89 Gazette 89/30**

(54) **FUTTERMITTEL FÜR GEFLÜGEL.**

(30) Priorität : **15.06.88 DE 3820303**

(43) Veröffentlichungstag der Anmeldung :
**10.04.91 Patentblatt 91/15**

(45) Bekanntmachung des Hinweises auf die
Patenterteilung :
**13.01.93 Patentblatt 93/02**

(84) Benannte Vertragsstaaten :
**AT BE CH DE FR GB IT LI LU NL SE**

(56) Entgegenhaltungen :
**EP-A- 0 035 882**
**WO-A-84/04871**
**DE-A- 3 314 556**
**LU-A- 82 890**
**US-A- 4 128 640**
**Derwent File Supplier WPI(L), AN No 79-**
**08535B(05), 1979, Derwent Publications Ltd**
**(London, GB)**

(56) Entgegenhaltungen :
**Soviet Inventions Illustrated, Week 8905, ab-**
**stract no. 89-038458/05, 15 March 1989, Der-**
**went Publications Ltd (London, GB)**
**Patent Abstracts of Japan, vol. 12, no. 275**
**(C-516)(3122), 29 July 1988**
**Nutrition. Reports International, vol. 32, no. 5,**
**November 1985, N.M.A. El-Shayeb et al.:**
**"New strategies in search ofcontrol of afla-**
**toxin formation in poultry feeds by marine**
**algae", pages 1021-1027**

(73) Patentinhaber : **HORSCH, Dieter**
**Gut Neuhof**
**W-7109 Schöntal (DE)**

(72) Erfinder : **HORSCH, Dieter**
**Gut Neuhof**
**W-7109 Schöntal (DE)**

(74) Vertreter : **Müller, Hans**
**Patentanwaltskanzlei Müller und Clemens**
**Lerchenstrasse 56**
**W-7100 Heilbronn (DE)**

EP 0 420 878 B1

**Beschreibung**

TECHNISCHES GEBIET

Die Erfindung betrifft ein Futtermittel für Geflügel wie beispielsweise Hühner.

Das Futtermittel dient sowohl zum Erhalter der Hühner als auch zum Erzeugen einer optimalen Legeleistung.

STAND DER TECHNIK

Nach veröffentlichten Statistiken weisen etwa 8 Prozent aller Hühnereier eine derart schlechte Schalerstabilität auf, daß diese Eier für den Verkauf ungeeignet sind.

Die Schalenstabiliät, die ein wichtiges Kriterium für den Verbraucher darstellt, wird wesentlich durch die Fütterung beeinflußt. So enthalten übliche Futtermittel 3 bis 4 Prozent Calcium, was etwa 7 bis 9 Prozent kohlensaurem Kalk entspricht.

Versuche, durch eine erhöhte Zugabe von Calcium die Anzahl dünnschaliger Eier (Knickeier) zu vermindern und die Stabilität der Eischale insgesamt zu erhöhen, haben zu keinem Erfolg geführt. Gleiches gilt auch für das Zufüttern von Austernschalen. Auch hierdurch kann der Knickeier-Anteil nachweislich nicht reduziert werden. Ferner läßt sich auch keine erhöhte Bruchfestigkeit entsprechender Eier nachweisen. Auch die Legeleistung läßt sich durch die Zufütterung von Austernschalen nicht erhöhen. Derartige Fütterungsversuche führen damit nicht zu einer Verbesserung der Legeleistung oder zu einer Erhöhung der Eischalenqualität.

Aus der DE-A-3 314 556 ist ein mineralisches Beifutter für Vögel bekannt, das kohlensaure Algenkalkkörner enthält. Zur Förderung der Gesundheit und des Wohlbefindens der Vögel sind die Algenkalkkörner mit einem Überzug aus Natrium- und/oder Kaliumwasserglas versehen. Das Problem der Eischalenstabilität ist in dieser Druckschrift nicht angesprochen und daher auch keine diesbezüglichen allgemeinen oder gar quantitativen Angaben offenbart.

DARSTELLUNG DER ERFINDUNG

Ausgehend von diesem vorbekannten Stand der Technik liegt der Erfindung die Aufgabe zugrunde, ein Futtermittel anzugeben, das zu einer optimalen Legeleistung und Eischalen-Stabilität führt.

Diese Erfindung ist durch die Merkmale des Hauptanspruths gegeben. Vorteilhafte Weiterbildungen der Erfindung sind in den Unteransprüchen angegeben.

Die Erfindung zeichnet sich bei dem eingangs erwähnten Futtermittel für Geflügel dementsprechend durch eine Zugabe von kohlensaurem Kalk aus Meeresalgen zwischen einen und zwölf gewichtsprozent des Futtermittels aus. Überraschenderweise hat es sich nämlich herausgestellt, daß ein derartiges Futtermittel sowohl die Stabilität der Eischalen erhöht als auch ganz allgemein zu einer höheren Legeleistung führt. Zusätzlich hat es sich gezeigt, daß sich auch das Durchhaltevermögen von Legehennen entscheidend verbessert hat. Schließlich konnte während der gesamten Lebensdauer von Hühnern, d.h. sowohl beim Küken als auch noch bei Althennen, auch eine größere Widerstandsfähigkeit gegen Krankheiten registriert werden. Wiederum können Antibiotika-Gaben oder -Zumischungen entfallen. Neben einer kostenmäßigen Entlastung für den Eiproduzenten ist dies auch im Hinblick auf ein gewandeltes Umweltbewußtsein und den Wunsch nach möglichst natürlicher Nahrung von großem Vorteil.

Besonders gute Ergebnisse wurden während der ersten drei Lebensmonate von Hennen mit einem Futtermittel etwa folgender Zusammensetzung erzielt:

| Weizen | etwa 28 | Gewichtsprozent-Anteil |
| Mais | etwa 20 | Gewichtsprozent-Anteil |
| Hafer | etwa 9 | Gewichtsprozent-Anteil |
| Sojaschrot | etwa 16 | Gewichtsprozent-Anteil |
| Reisfuttermehl | etwa 9,6 | Gewichtsprozent-Anteil |
| Fischmehl | etwa 1 | Gewichtsprozent-Anteil |
| Grünmehl | etwa 5 | Gewichtsprozent-Anteil |

```
Tiermehl            etwa   3   Gewichtsprozent-Anteil
Mineralstoff- und
Vitaminvormischung etwa   1,4 Gewichtsprozent-Anteil
Kohlensaurer Kalk
aus Meeresalgen      etwa   7   Gewichtsprozent-Anteil
```

Dieser Meeresalgenkalk wurde dabei in mehliger Konsistenz verfüttert. Zur Aufrechterhaltung der erzielten guten Ergebnisse hat es sich als vorteilhaft herausgestellt, etwa zwischen dem vierten und siebten Legemonat den Anteil von Kohlensaurem Kalk aus Meeresalgen um etwa ein Gewichtsprozent-Anteil zu erhöhen und dafür den in dem Futtermittel vorhandenen Getreideanteil wie insbesondere den Anteil von Hafer entsprechend, d. h. um etwa ein Gewichtsprozent-Anteil zu reduzieren.

Während etwa des achten bis elften Legemonats wird der Anteil von kohlensaurem Kalk aus Meeresalgen vorteilhafterweise noch einmal um ein Gewichtsprozent-Anteil erhöht und dementsprechend wiederum der Getreideranteil und dabei insbesondere der Anteil von Hafer um etwa ein Gewichtsprozent-Anteil vermindert.

Für den mit erfindungsgemäßen Futtermittel erzielbaren Erfolg ist es wie auch bei bekannten Futtermittel nach wie vor erforderlich, daß eine gleichbleibende Futterzusammensetzung verwendet und ein ausreichendes Wasserangebot und Tagesfutterangebot bereitgestellt wird. Selbstverständlich muß auch bei der Futterzusammensetzung das Alter der Hennen und die Legezeit berücksichtigt werden. Wegen der Futteraufnahme ist darüber hinaus auch die Tages- und Nachttemperatur in bekannter Weise zu beachten.

**Patentansprüche**

1. Futtermittel für Geflügel,
   **dadurch gekennzeichnet**, daß bei Hennen die Zugabe von kohlensaurem Kalk aus Meeresalgen zwischen einem und zwölf Gewichtsprozent des Futtermittels beträgt.

2. Futtermittel nach Anspruch 1,
   **dadurch gekennzeichnet**, daß etwa in den ersten sechs Lebensmonaten von Hennen, d. h., während der Lebensentwicklung vom Küken zur Junghenne, die Zugabe etwa zwischen einem und sieben Gewichtsprozent des Futtermittels beträgt.

3. Futtermittel nach Anspruch 1,
   **dadurch gekennzeichnet**, daß etwa in den ersten drei Lebensmonaten von Hennen die Zugabe etwa zwischen fünf und neun, vorzugsweise etwa sieben Gewichtsprozent des Futtermittels beträgt.

4. Futtermittel nach Anspruch 1,
   **dadurch gekennzeichnet**, daß etwa vom vierten bis siebten Legemonat von Hennen die Zugabe etwa zwischen sechs und zehn, vorzugsweise etwa acht Gewichtsprozent des Futtermittels beträgt.

5. Futtermittel nach Anspruch 1,
   **dadurch gekennzeichnet**, daß etwa vom achten bis elften Legemonat von Hennen die Zugabe etwa zwischen sieben und elf, vorzugsweise etwa neun Gewichtsprozent des Futtermittels beträgt.

6. Futtermittel nach einem der Ansprüche 1 bis 5,
   **dadurch gekennzeichnet**, daß die mit höherem Lebensalter ansteigende gewichtsprozentuale Zugabe von kohlensaurem Kalk durch eine entsprechend große Verminderung des in dem Futtermittel vorhandenen Getreide wie vorzugsweise Hafer ausgeglichen ist.

7. Futtermittel nach Anspruch 3,
   **gekennzeichnet durch**
   folgende Zutaten:

| Weizen | etwa 28 | Gewichtsprozent-Anteil |
|---|---|---|
| Mais | etwa 20 | Gewichtsprozent-Anteil |
| Hafer | etwa 9 | Gewichtsprozent-Anteil |
| Sojaschrot | etwa 16 | Gewichtsprozent-Anteil |
| Reisfuttermehl | etwa 9,6 | Gewichtsprozent-Anteil |
| Fischmehl | etwa 1 | Gewichtsprozent-Anteil |
| Grünmehl | etwa 5 | Gewichtsprozent-Anteil |
| Tiermehl | etwa 3 | Gewichtsprozent-Anteil |
| Mineralstoff- und Vitaminvormischung | etwa 1,4 | Gewichtsprozent-Anteil |
| Kohlensaurer Kalk aus Meeresalgen | etwa 7 | Gewichtsprozent-Anteil |
| | ---- | |
| | 100 | Gewichtsprozent-Anteil |

8. Futtermittel nach Anspruch 4, **gekennzeichnet durch** folgende Zutaten:

| Weizen | etwa 28 | Gewichtsprozent-Anteil |
|---|---|---|
| Mais | etwa 20 | Gewichtsprozent-Anteil |
| Hafer | etwa 8 | Gewichtsprozent-Anteil |
| Sojaschrot | etwa 16 | Gewichtsprozent-Anteil |
| Reisfuttermehl | etwa 9,6 | Gewichtsprozent-Anteil |
| Fischmehl | etwa 1 | Gewichtsprozent-Anteil |
| Grünmehl | etwa 5 | Gewichtsprozent-Anteil |
| Tiermehl | etwa 3 | Gewichtsprozent-Anteil |
| Mineralstoff- und Vitaminvormischung | etwa 1,4 | Gewichtsprozent-Anteil |
| Kohlensaurer Kalk aus Meeresalgen | etwa 8 | Gewichtsprozent-Anteil |
| | ---- | |
| | 100 | Gewichtsprozent-Anteil |

9. Futtermittel nach Anspruch 5, **gekennzeichnet durch** folgende Zutaten:

```
Weizen                    etwa 28    Gewichtsprozent-Anteil
Mais                      etwa 20    Gewichtsprozent-Anteil
Hafer                     etwa  7    Gewichtsprozent-Anteil
Sojaschrot                etwa 16    Gewichtsprozent-Anteil
Reisfuttermehl            etwa  9,6  Gewichtsprozent-Anteil
Fischmehl                 etwa  1    Gewichtsprozent-Anteil
Grünmehl                  etwa  5    Gewichtsprozent-Anteil
Tiermehl                  etwa  3    Gewichtsprozent-Anteil
Mineralstoff- und
Vitaminvormischung        etwa  1,4  Gewichtsprozent-Anteil
Kohlensaurer Kalk
aus Meeresalgen           etwa  9    Gewichtsprozent-Anteil
                                     ----
                               100   Gewichtsprozent-Anteil
```

## Claims

1. Poultry feed, characterized in that, in hens, the supplement of calcium carbonate from marine algae is between one and twelve percent by weight of the feed.

2. Feed according to Claim 1, characterized in that, over about the first six months of the lives of hens, that is to say during the development from chicken to pullet, the supplement is approximately between one and seven percent by weight of the feed.

3. Feed according to Claim 1, characterized in that, in about the first three months of the lives of hens, the supplement is approximately between five and nine, preferably approximately seven, percent by weight of the feed.

4. Feed according to Claim 1, characterized in that, from about the fourth to the seventh month of laying in hens, the supplement is approximately between six and ten, preferably approximately eight, percent by weight of the feed.

5. Feed according to Claim 1, characterized in that, from about the eighth to the eleventh month of laying in hens, the supplement is approximately between seven and eleven, preferably approximately nine, percent by weight of the feed.

6. Feed according to one of Claims 1 to 5, characterized in that the supplement of calcium carbonate in percent by weight, which increases with increasing age, is balanced by a corresponding reduction in the amount of cereal present in the feed such as, preferably, oats.

7. Feed according to Claim 3, characterized by the following components:

| Wheat | about | 28 | percent by weight |
|---|---|---|---|
| Maize | about | 20 | percent by weight |
| Oats | about | 9 | percent by weight |
| Soybean meal | about | 16 | percent by weight |
| Rice polishings | about | 9.6 | percent by weight |
| Fish meal | about | 1 | percent by weight |
| Forage meal | about | 5 | percent by weight |
| Meat and bone meal | about | 3 | percent by weight |
| Mineral and vitamin premix | about | 1.4 | percent by weight |
| Calcium carbonate from marine algae | about | 7 | percent by weight. |
| | | 100 | percent by weight. |

8. Feed according to Claim 4, characterized by the following components:

| Wheat | about | 28 | percent by weight |
|---|---|---|---|
| Maize | about | 20 | percent by weight |
| Oats | about | 8 | percent by weight |
| Soybean meal | about | 16 | percent by weight |
| Rice polishings | about | 9.6 | percent by weight |
| Fish meal | about | 1 | percent by weight |
| Forage meal | about | 5 | percent by weight |
| Meat and bone meal | about | 3 | percent by weight |
| Mineral and vitamin premix | about | 1.4 | percent by weight |
| Calcium carbonate from marine algae | about | 8 | percent by weight. |
| | | 100 | percent by weight. |

9. Feed according to Claim 5, characterized by the following components:

```
Wheat                   about    28      percent by weight
Maize                   about    20      percent by weight
Oats                    about     7      percent by weight
Soybean meal            about    16      percent by weight
Rice polishings         about     9.6 percent by weight
Fish meal               about     1      percent by weight
Forage meal             about     5      percent by weight
Meat and
bone meal               about     3      percent by weight
Mineral and
vitamin premix          about     1.4 percent by weight
Calcium carbonate
from marine algae  about    9    percent by weight.
                          100      percent by weight.
```

**Revendications**

1. Aliment pour volaille, caractérisé en ce que dans le cas de poules la dose de chaux carbonatée provenant d'algues marines vaut entre 1 et 12 % du poids de l'aliment.

2. Aliment selon la revendication 1, caractérisé en ce qu'environ dans les premiers six mois de la vie des poules, c'est-à-dire pendant le développement des poussins en jeunes poules, la dose vaut entre environ 1 et 7 % du poids d'aliment.

3. Aliment selon la revendication 1, caractérisé en ce que pendant environ les trois premiers mois de la vie des poules, la dose vaut entre environ 5 et 9, et de préférence environ 7 % du poids d'aliment.

4. Aliment selon la revendication 1, caractérisé en ce que du quatrième au septième mois de ponte des poules, la dose vaut entre environ 6 et 7, et de préférence environ 8 % du poids de l'aliment.

5. Aliment selon la revendication 1, caractérisé en ce qu'entre environ le huitième et le onzième mois de pose des poules, la dose vaut entre environ 7 et 11, et de préférence environ 9 % du poids de l'aliment.

6. Aliment selon l'une des revendications 1 à 5, caractérisé en ce que avec l'augmentation de l'âge, on compense une augmentation de la dose de chaux carbonatée exprimée en pourcentage du poids par une réduction correspondante des céréales présentent dans l'aliment, comme de préférence l'avoine.

7. Aliment selon la revendication 3, caractérisé par la composition suivante:

| | | |
|---|---|---|
| blé | environ 28 | % en poids |
| maïs | environ 20 | % en poids |
| avoine | environ 9 | % en poids |
| graines de soja concassées | environ 16 | % en poids |
| farine de riz | environ 9,6 | % en poids |
| farine de poisson | environ 1 | % en poids |

| | |
|---|---|
| farine verte | environ 5 % en poids |
| farine animale | environ 3 % en poids |
| mélange de minéraux et de vitamines | environ 1,4 % en poids |
| chaux carbonatée provenant | |
| d'algues marines | environ 7 % en poids |
| | = = = = = |
| | 100 % en poids |

8. Aliment selon la revendication 4, caractérisé par la composition suivante:

| | |
|---|---|
| blé | environ 28 % en poids |
| maïs | environ 20 % en poids |
| avoine | environ 8 % en poids |
| graines de soja concassées | environ 16 % en poids |
| farine de riz | environ 9,6 % en poids |
| farine de poisson | environ 1 % en poids |
| farine verte | environ 5 % en poids |
| farine animale | environ 3 % en poids |
| mélange de minéraux et de vitamines | environ 1,4 % en poids |
| chaux carbonatée provenant | |
| d'algues marines | environ 8 % en poids |
| | = = = = = |
| | 100 % en poids |

9. Aliment selon la revendication 5, caractérisé par la composition suivante:

| | |
|---|---|
| blé | environ 28 % en poids |
| maïs | environ 20 % en poids |
| avoine | environ 7 % en poids |
| graines de soja concassées | environ 16 % en poids |
| farine de riz | environ 9,6 % en poids |
| farine de poisson | environ 1 % en poids |
| farine verte | environ 5 % en poids |
| farine animale | environ 3 % en poids |
| mélange de minéraux et de vitamines | environ 1,4 % en poids |
| chaux carbonatée provenant | |
| d'algues marines | environ 9 % en poids |
| | = = = = = |
| | 100 % en poids |